# EUROPEAN PATENT SPECIFICATION

(11) **EP 2 076 086 B1**
(45) Date of publication and mention of the grant of the patent: **07.02.2018**
(21) Application number: 08022057.7
(22) Date of filing: 18.12.2008
(51) Int. Cl.: H04W 72/08, H04L 5/00, H04L 1/00, H04W 72/12, H04W 88/02, H04W 88/08

(54) **MULTI-USER MULTI-INPUT MULTI-OUTPUT SYSTEM AND NODE B, USER EQUIPMENT, AND CQI FEEDBACK METHOD**
MIMO-SYSTEM UND KNOTEN B FÜR MEHRERE BENUTZER, BENUTZERGERÄT UND CQI-FEEDBACK-VERFAHREN
SYSTÈME MULTI-UTILISATEURS D'ENTRÉES/SORTIES MULTIPLES ET NOEUD B, ÉQUIPEMENT D'UTILISATEUR, ET PROCÉDÉ DE RÉTROACTION CQI

(30) Priority: 28.12.2007 CN 200710305888
(43) Date of publication of application: 01.07.2009
(73) Proprietor: NTT DOCOMO, INC., Tokyo 100-6150 (JP)
(72) Inventor: Zhu, Jianchi, Haidian District Beijing 100190 (CN); She, Xiaoming, Haidian District Beijing 100190 (CN); Liu, Jingxiu, Haidian District Beijing 100190 (CN); Chen, Lan, Haidian District Beijing 100190 (CN); Taoka, Hidekazu, Yokosuka-shi Kanagawa-ken, 239-8536 (JP)
(74) Representative: Zimmermann, Tankred Klaus

(56) References cited:
- WO-A1-2007/105928
- US-A1- 2007 223 423
- SAMSUNG: "UE feedback and scheduling considerations for 4-Tx antenna MIMO", 3GPP DRAFT; R1-063262, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Riga, Latvia; 20061101, 1 November 2006 (2006-11-01), XP050103712, [retrieved on 2006-11-01]
- TEXAS INSTRUMENTS: "Further Link Level Evaluation of Layer Permutation", 3GPP DRAFT; R1-063235 TI MIMO LP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Riga, Latvia; 20061102, 2 November 2006 (2006-11-02), XP050103687, [retrieved on 2006-11-02]
- QUALCOMM: "Qualcomm Proposal for 3GPP2 Physical Layer", 3GPP2 DRAFT; C30-20060522-035_QC_PROPOSAL_V1.0, 3RD GENERATION PARTNERSHIP PROJECT 2, 3GPP2, 2500 WILSON BOULEVARD, SUITE 300, ARLINGTON, VIRGINIA 22201 ; USA , vol. TSGC, no. v1.0 24 May 2006 (2006-05-24), pages 1-108, XP062033194, Retrieved from the Internet: URL:http://ftp.3gpp2.org/TSGC/Working/2006 /2006-05-Denver/TSG-C-2006-05-Denver/WG3/ [retrieved on 2006-05-24]
- TEXAS INSTRUMENTS: "Rank and PMI Feedback Rate - Analysis", 3GPP DRAFT; R1-074696 TI RANK + PMI ANALYSIS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Korea; 20071030, 30 October 2007 (2007-10-30), XP050108171, [retrieved on 2007-10-30]

## Description

### Field of the Invention

The present invention relates to a mobile communication technology and particularly to a multi-user multi-input multi-output system, a Node B, a user equipment and a CQI (Channel Quality Indicator) feedback method.

### Background of the Invention

In order to improve a throughput and spectrum utilization efficiency of the LTE (Long Term Evolution) network, a MIMO (multi-input multi-output) system uses multiple antennas at a transmitter side and at a receiver side.

A basic antenna configuration of the MIMO system is 2*2, i.e., two transmitting antennas at a Node B (base station) and two receiving antennas at a UE (user equipment) and there may be a configuration of 4*4 antennas.

In a current MU-MIMO (Multi-User Multi-Input Multi-Output) system, a main transmission mode of data is Rank (Order) 1 transmission mode or Rank 2 transmission mode.

According to Rank (Order) 1 transmission mode, a single data stream is transmitted and there is no interference from other user in a same RB (Resource Block).

According to Rank 2 transmission mode, two data streams are transmitted and there are interferences from other user in a same RB.

Of course, with the development of technology, Rank n (n>2) transmission mode may come into being.

Codebook based MIMO transmission technology is one of the most important technologies in future mobile communication systems. MU-MIMO transmission system can greatly improve the throughput and spectral efficiency of the wireless mobile communication system by use of limited feedback information.

The Node B performs Rank adaptation according to a CQI fed back from a UE and selects a transmission block size, modulation and coding scheme and number of available RBs accordingly, so as to transmit information maximally and thus to improve the throughput and efficiency of the system effectively. At this time, the Node B needs to acquire CQIs in all transmission modes in order to perform the Rank adaptation.

The following description is given by taking Rank 1 and Rank 2 transmission modes as examples.

In the current MU-MIMO system, the UE only feeds back Rank 1 CQI on each RB and when the Node B performs the Rank adaptation, it acquires the Rank 2 CQI according to the correspondence between Rank 1 and Rank 2 and further performs the scheduling according to the Rank 1 and Rank 2 CQIs.

However, since in the above solution the Rank 2 CQI acquired according to the correspondence between Rank 1 and Rank 2 is not the true Rank 2 CQI, as a result, the Rank 2 CQI is not accurate in the Rank 2 transmission mode. Thus, the selected coding and modulation mode is not accurate and the system throughput performance is reduced accordingly.

Of course, if the UE feeds back the Rank 2 CQI on each RB, obviously the system throughput performance will be reduced, too.

If the UE feeds back the Rank 1 CQI and the Rank 2 CQI on each RB simultaneously, the CQIs for scheduling and precoding are accurate. However, the overhead for uplink signaling is large, which is not in conformity with requirements of current specifications, and it is very complex to realize.

US 2007/223423A1 discloses techniques for supporting MIMO transmission. Channel Quality Indicator (CQI) information received from the UEs is interpreted in different manners depending on the groups to which the UEs belong. A single UE may be selected at a time from the first group or multiple UEs may be selected at a time from the second group for MIMO transmission. A MIMO transmission may be sent to a single UE in the first group or multiple UEs in the second group at rates selected based upon the CQI information.

### Summary of the Invention

An objective according to an embodiment of the present invention is to provide a multi-user multi-input multi-output (MU-MIMO) system and a Node B, a user equipment and a Channel Quality Indicator (CQI) feedback method, which can improve the system throughput performance without increment of the overhead for uplink signaling. The embodiments which do not fall within the scope of the claims should be interpreted as examples. In an aspect of the present invention, a Multi-User Multi-Input Multi-Output (MU-MIMO) system, comprising a Node B and User Equipments (UEs) which communicate with each other through a wireless network, is provided.

The UE feeds back a Channel Quality Indicator (CQI) corresponding to a previous scheduled first Rank to the Node B, wherein the previous scheduled first Rank is the number of data streams stored in a register.

The Node B acquires CQIs corresponding to all Ranks of the UE according to the CQI corresponding to the first Rank fed back from the UE and performs scheduling according to the CQIs corresponding to all Ranks of all the UEs.

According to another aspect of the present invention, a Channel Quality Indicator (CQI) feedback method in a Multi-User Multi-Input Multi-Output (MU-MIMO) system, comprising a step of feeding back a CQI and a step of acquiring CQIs corresponding to all Ranks of a User Equipment (UE) by a Node B, is provided.

In the step of feeding back the CQI, the UE feeds back a CQI corresponding to a first Rank to the Node B and the first Rank is a previous scheduled first Rank of the UE, wherein the previous scheduled first Rank is the number of data streams stored in a register.

In the step of acquiring the CQIs corresponding to all Ranks of the UE by the Node B, the Node B acquires the CQIs corresponding to all Ranks of the UE according to the CQI corresponding to the first Rank fed back from the UE.

According to still another aspect of the present invention, the provided is a User Equipment (UE), comprising:
a first feedback module, for transmitting a Channel Quality Indicator (CQI) corresponding to a first Rank to a Node B.

The first Rank is a previous scheduled first Rank for a resource block or a newest Rank in a high layer signaling, wherein the previous scheduled first Rank is the number of data streams stored in a register.

According to still another aspect of the present invention, the provided is a Node B, comprising:
a second register, for storing previous scheduled first Ranks for resource blocks of User Equipments (UEs), wherein the previous scheduled first Rank is the number of data streams stored in a register;
a correspondence storing module, for storing a correspondence between Channel Quality Indicators (CQIs) corresponding to different Ranks;
a first acquiring module, for acquiring CQIs corresponding to all Ranks of the UE according to the CQI corresponding to the first Rank and the correspondence between the CQIs corresponding to the different Ranks; and
a scheduling module, for performing Rank adaptation according to the CQIs corresponding to all Ranks of all the UEs.

Compared with the prior art, the embodiments of the present invention can achieve the following advantageous effects.

The UE obtains a CQI corresponding to a previous scheduled Rank and then feeds back the CQI to the Node B or the UE obtains the CQI corresponding to another Rank according to the correspondence between the CQIs corresponding to different Ranks and then feeds back the CQI to the Node B. Thus, the Node B may obtain the precise CQI corresponding to the previous scheduled Rank. In a case of slow fading channels, since the transmission mode of the UE remains in a constant status during a period of time, an accurate modulation and coding mode may be selected according to the precise CQI. Thus, the system throughput performance can be improved effectively.

When the Rank information is indicated by the high layer signaling, the UE obtains the CQI corresponding to the newest Rank in the high layer signaling and then feeds back the CQI to the Node B or the UE obtains the CQI corresponding to another Rank according to the correspondence between the CQIs corresponding to different Ranks and then feeds back the CQI to the Node B. Thus, the Node B may obtain the precise CQI corresponding to the newest Rank in the high layer signaling and at the same time, the Node B may perform the scheduling with this Rank according to the newest Rank in the high layer signaling, so that an accurate modulation and coding mode may be selected according to the precise CQI. Thus, the system throughput performance can be improved effectively.

With regard to the uplink signaling overhead, since the UE only feeds back the CQI corresponding to one kind of transmission mode, the uplink signaling overhead is not increased compared with the prior art.

### Brief Description of the Drawings

Fig. 1 is a schematic diagram showing architecture of a MIMO (multi-input multi-output) system according to the first embodiment of the present invention;
Fig. 2 is a flow chart of a method according to the first embodiment of the present invention;
Fig. 3 is a schematic diagram showing architecture of a MIMO system according to the second embodiment of the present invention;
Fig. 4 is a flow chart of a method according to the second embodiment of the present invention;
Fig. 5 is a schematic diagram showing architecture of a MIMO (multi-input multi-output) system according to the third embodiment of the present invention;
Fig. 6 is a flow chart of a method according to the third embodiment of the present invention;
Fig. 7 is a schematic diagram showing architecture of a MIMO system according to the fourth embodiment of the present invention;
Fig. 8 is a flow chart of a method according to the fourth embodiment of the present invention;
Fig. 9 is a schematic diagram showing a simulation result of the method of the present invention under a first simulation condition; and
Fig. 10 is a schematic diagram showing a simulation result of the method of the present invention under a second simulation condition.

### Detailed Description of the Invention

Embodiments of the present invention will be described in detail with reference to accompanied drawings.

### <First Embodiment>

In the first embodiment of the present invention, illustration will be given with reference to an example in which all UEs feed back CQIs corresponding to previous scheduled first Ranks.

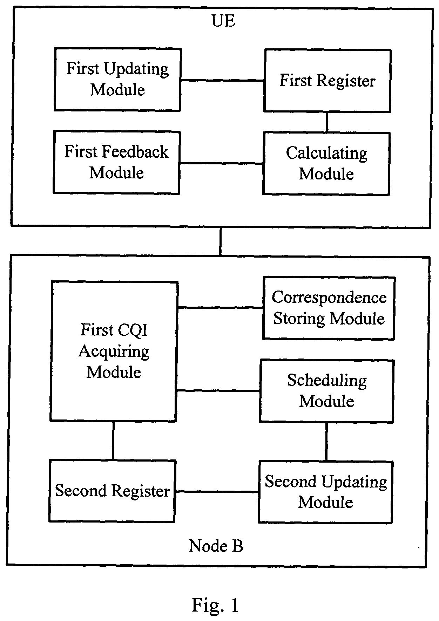

As shown in Fig. 1, a MIMO (multi-input multi-output) system according to the first embodiment of the invention includes a Node B and UEs, and the Node B and the UEs communicate with each other through a wireless network.

The UE includes:
a first register, for storing a previous scheduled first Rank for a resource block of the UE, wherein the first Rank is one of Rank 1, Rank 2...and Rank n;
a calculating module, for calculating a CQI corresponding to the first Rank; and
a first feedback module, for transmitting the CQI corresponding to the first Rank to the Node B.

The Node B includes:
a second register, for storing previous scheduled first Ranks for resource blocks of the UEs;
a correspondence storing module, for storing a correspondence between CQIs corresponding to different Ranks;
a first CQI acquiring module, for acquiring CQIs corresponding to all Ranks of the UE according to the CQI corresponding to the first Rank and the correspondence between the CQIs corresponding to the different Ranks after determining that the CQI fed back from the UE is the CQI corresponding to the first Rank according to the first Ranks in the second register;
a scheduling module, for performing Rank adaptation according to the CQIs corresponding to all Ranks of all the UEs; and
a second updating module, for updating the first Rank stored in the second register of the UE according to the scheduled Rank and notifying the updated Rank to the UE.

The UE further includes:
a first updating module, for updating the first Rank stored in the first register according to the first Rank transmitted from the Node B.

In the first embodiment of the present invention, the UEs feed back the CQIs corresponding to the previous scheduled Ranks respectively and the Ranks corresponding to the CQIs fed back from the UEs may be the same and may be different. Therefore, the previous scheduled first Ranks for the RBs of the UEs are stored in the second register so that the Node B may correctly recognize the Ranks corresponding to the CQIs fed back from the UEs and further acquire the CQIs corresponding to all the Ranks of the UEs according to the correspondence between the CQIs corresponding to the different Ranks.

Of course, the Node B may acquire the Ranks corresponding to the CQIs fed back from the UEs according to other methods. For example, the UE may attach the Rank in the feedback information and other methods are also feasible.

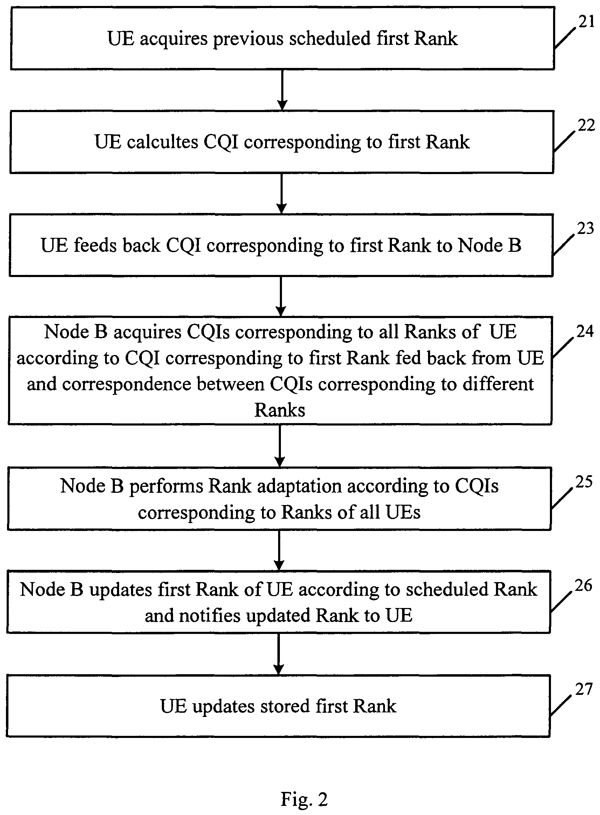

As shown in Fig. 2, a CQI feedback method in the MU-MIMO system according to the first embodiment of the present invention includes the following steps.

In step 21, the UE acquires a previous scheduled first Rank.

In step 22, the UE calculates a CQI corresponding to the first Rank.

In step 23, the UE transmits the CQI corresponding to the first Rank to the Node B.

In step 24, the Node B acquires CQIs corresponding to all Ranks of the UE according to the CQI corresponding to the first Rank fed back from the UE and the correspondence between CQIs corresponding to different Ranks.

In step 25, the Node B performs Rank adaptation according to the CQIs corresponding to all Ranks of all the UEs.

In step 26, the Node B updates the first Rank of the UE according to the scheduled Rank and notifies the updated Rank through a downlink signaling to the UE.

In step 27, the UE updates the stored first Rank.

And the next time, the UE will calculate a CQI corresponding to the updated first Rank.

The method according to the first embodiment of the present invention will be illustrated by taking Rank 1 and Rank 2 for example.

Since in the MU-MIMO system, the channel is a slow varying channel, i.e. after the UE transfers from Rank 1 transmission mode to Rank 2 transmission mode, the UE will remain in Rank 2 transmission mode for a subsequent period and vice versa.

Assuming UE 1 and UE 2 transfer from Rank 1 transmission mode to Rank 2 transmission mode at time 1, at this time the values in the first registers corresponding to UE 1 and UE 2 respectively are 1 both (assuming that the value in the register is 1 represents a previous scheduled Rank for a RB of a UE is Rank 2 and that the value in the register is 0 represents a previous scheduled Rank for a RB of a UE is Rank 1).

In prior art, UE 1 and UE 2 always feed back the CQIs corresponding to Rank 1, however, after UE 1 and UE 2 transfer from Rank 1 transmission mode to Rank 2 transmission mode, the CQIs corresponding to Rank 2 acquired by the Node B is acquired according to the correspondence between Rank 1 and Rank 2, wherein the Rank 2 CQIs are not the true Rank 2 CQIs, which will make the selected coding and modulation mode inaccurate and result in a decrease in the system throughput.

However, according to the method of the present invention, after UE 1 and UE 2 transfer from Rank 1 transmission mode to Rank 2 transmission mode, since the Ranks in the first registers are both 1, when UE 1 and UE 2 feed back CQIs, they will calculate and feed back the CQIs corresponding to Rank 2. The calculated CQIs corresponding to Rank 2 are accurate. At the same time, since in the subsequent period, UE 1 and UE 2 will still in Rank 2 transmission mode, the coding and modulation mode may be correctly selected based on the accurate CQIs corresponding to Rank 2 and the system throughput performance will be improved.

### <Second Embodiment>

In the first embodiment of the present invention, illustration is given with reference to the example in which all the UEs feed back the CQIs corresponding to the previous scheduled first Ranks.

In the first embodiment, UEs feed back different CQIs respectively. In the second embodiment, UEs feed back CQIs corresponding to a same Rank. The CQI corresponding to the same Rank may be one of the Rank 1 CQI, Rank 2 CQI, ..., and Rank n CQI but the CQIs fed back from all the UEs are the CQIs corresponding to the same Rank.

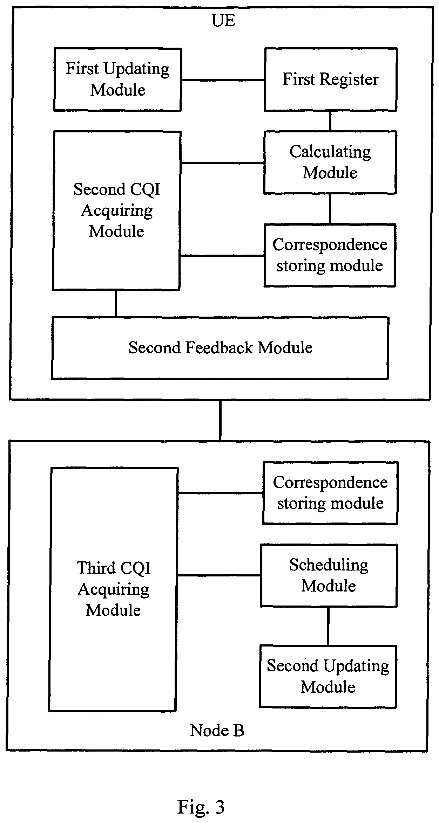

As shown in Fig. 3, a MIMO (multi-input multi-output) system according to the second embodiment of the invention includes a Node B and UEs, and the Node B and the UEs communicate through a wireless network.

The UE includes:
a first register, for storing a previous scheduled first Rank for a resource block of the UE wherein the first Rank is one of Rank 1, Rank 2...and Rank n;
a calculating module, for calculating a CQI corresponding to the first Rank;
a correspondence storing module, for storing a correspondence between CQIs corresponding to different Ranks;
a second CQI acquiring module, for acquiring a CQI corresponding to a second Rank according to the CQI corresponding to the first Rank and the correspondence between the CQIs corresponding to the different Ranks;
a second feedback module, for transmitting the CQI corresponding to the second Rank to the Node B, wherein all the UEs have the same second Rank.

The Node B includes:
a correspondence storing module, for storing the correspondence between the CQIs corresponding to the different Ranks;
a third CQI acquiring module, for acquiring CQIs corresponding to all Ranks of the UE according to the CQI corresponding to the first Rank and the correspondence between the CQIs corresponding to the different Ranks;
a scheduling module, for performing Rank adaptation according to the CQIs corresponding to all Ranks of all the UEs; and
a third updating module, for notifying the scheduled Rank to the UE.

The UE further includes:
a first updating module, for updating the first Rank stored in the first register according to the updated Rank transmitted from the Node B.

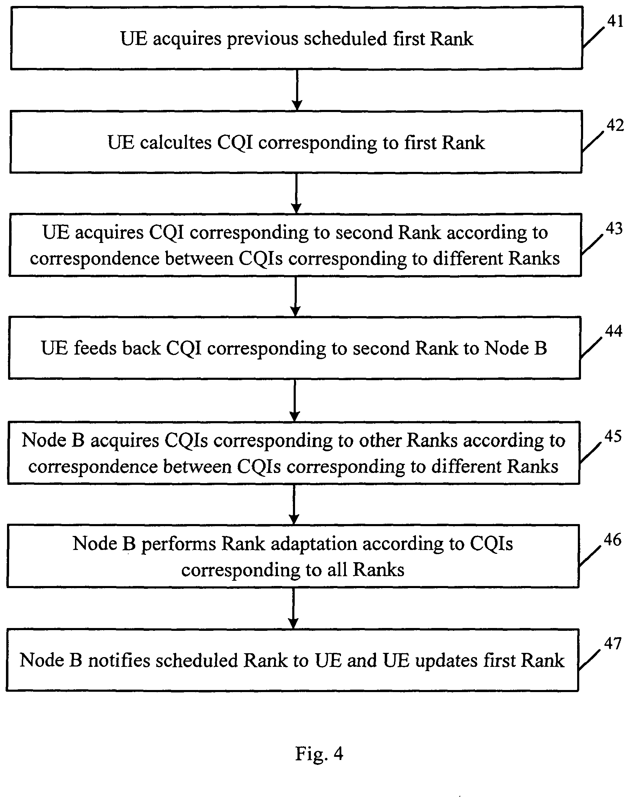

As shown in Fig. 4, a CQI feedback method in the MU-MIMO system according to the second embodiment of the present invention includes the following steps.

In step 41, the UE acquires a previous scheduled first Rank.

In step 22, the UE calculates a CQI corresponding to the first Rank.

In step 43, the UE acquires a CQI corresponding to a second Rank according to correspondence between CQIs corresponding to different Ranks.

In step 44, the UE feeds back the CQI corresponding to the second Rank to the Node B, wherein all the UEs have the same second Rank.

Of course, when the first Rank and the second Rank are the same, the UE may directly feed back the CQI calculated in step 42.

In step 45, the Node B acquires CQIs corresponding to all Ranks of the UE according to the CQI corresponding to the second Rank fed back from the UE and the correspondence between the CQIs corresponding to the different Ranks.

In step 46, the Node B performs Rank adaptation according to the CQIs corresponding to all the Ranks.

In step 47, the Node B notifies the scheduled Rank to the UE and the UE updates the first Rank.

And the next time, the UE will calculate a CQI corresponding to the updated first Rank.

The method according to the second embodiment of the present invention will be illustrated by taking Rank 1 and Rank 2 for example.

Since in the MU-MIMO system, the channel is a slow varying channel, i.e. after the UE transfers from Rank 1 transmission mode to Rank 2 transmission mode, the UE will remain in Rank 2 transmission mode for a subsequent period and vice versa.

Assuming UE 1 and UE 2 transfer from Rank 1 transmission mode to Rank 2 transmission mode at time 1, at this time the values in the first registers corresponding to UE 1 and UE 2 respectively are 1 both (assuming that the value in the register is 1 represents a previous scheduled Rank for a RB of a UE is Rank 2 and that the value in the register is 0 represents a previous scheduled Rank for a RB of a UE is Rank 1).

In prior art, UE 1 and UE 2 always feed back the CQIs corresponding to Rank 1, however, after UE 1 and UE 2 transfer from Rank 1 transmission mode to Rank 2 transmission mode, the CQIs corresponding to Rank 2 acquired by the Node B is acquired according to the correspondence between Rank 1 and Rank 2, wherein the Rank 2 CQIs are not the true Rank 2 CQIs, which will make the selected coding and modulation mode inaccurate and result in a decrease in the system throughput.

However, according to the second embodiment of the present invention, after UE 1 and UE 2 transfer from Rank 1 transmission mode to Rank 2 transmission mode, since the Ranks in the first registers are both 1, when UE1 and UE2 feed back CQIs, UE 1 and UE 2 will first calculate the CQIs corresponding to Rank 2. The calculated CQIs corresponding to Rank 2 are accurate. Then the UE acquires the CQI corresponding to Rank 1 by searching the correspondence according to the CQI corresponding to Rank 2 and feeds back the CQI corresponding to Rank 1 to the Node B. The Node B acquires the CQI corresponding to Rank 2 according to the same correspondence. Since the Node B and the UE maintain the same correspondence, the CQI corresponding to Rank 2 acquired by the Node B is accurate. At the same time, since in the subsequent period, UE 1 and UE 2 will still in Rank 2 transmission mode, the coding and modulation mode may be correctly selected based on the accurate CQIs corresponding to Rank 2 and the system throughput performance will be improved.

In the first and second embodiments of the present invention, each UE is provided with a register and there are at least following two contents in the register:
RB index, which represents an identifier of a resource block used for transmitting data; and
Rank index, which represents an identifier of a previous used transmission mode.

The register provided in the Node B in the first embodiment has at least following three contents:
UE index, which represents an identifier of a UE in the system;
RB index, which represents an identifier of a resource block used for transmitting data; and
Rank index, which represents an identifier of a previous used transmission mode.

When there are only Rank 1 and Rank 2 transmission modes, Rank index can be distinguished by 0 and 1 and when there are more transmission modes, the number of bits of Rank index can be increased to distinguish the Rank index.

In both of the first and second embodiments of the present invention, the correspondence between CQIs corresponding to different Ranks needs to be acquired. The correspondence may be represented with a form of table or function or other forms as long as the form can represent the correspondence between CQIs corresponding to different Ranks. The embodiments of the present invention do not limit these representation forms.

In both of the first and second embodiments of the present invention, the Node B is provided with an updating module, which can notify the scheduled Rank to the UE through a downlink signaling or a high layer signaling.

In the first and second embodiments of the present invention, the CQI feedback is illustrated by taking an example of feeding back one CQI per RB. However, the present invention may also apply to the case of feeding back CQIs for several RBs or feeding back CQIs in the whole bandwidth. Since the processes are basically the same and the only difference lies in CQI feedback method, the detailed illustration here will be omitted.

### <Third Embodiment>

In the third embodiment of the present invention, illustration is given with reference to the example in which all the UEs feed back the CQIs corresponding to the Ranks in the high layer signaling.

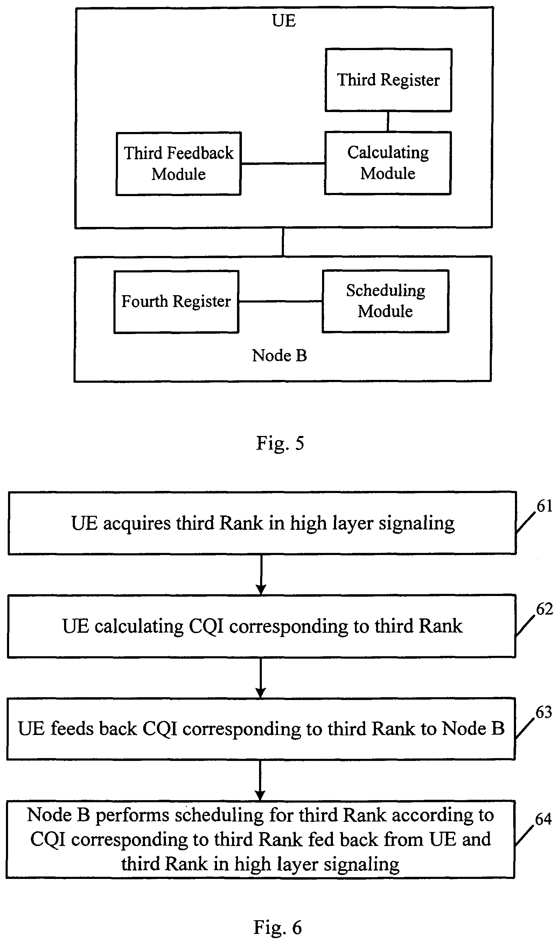

As shown in Fig. 5, a MIMO (multi-input multi-output) system according to the third embodiment of the invention includes a Node B and UEs and the Node B and the UEs communicate with each other through a wireless network.

The UE includes:
a third register, for storing a third Rank in the high layer signaling wherein the third Rank is one of Rank 1, Rank 2...and Rank n and the third Ranks of different UEs may be the same and may be different and the Rank stored in the third register is a newest third Rank in the high layer signaling;
a calculating module, for calculating a CQI corresponding to the third Rank; and
a third feedback module, for transmitting the CQI corresponding to the third Rank to the Node B.

The Node B includes:
a fourth register, for storing third Ranks in the high layer signaling, wherein the Ranks stored in the fourth register are the newest third Ranks in the high layer signaling and are the same with those stored in the third registers of the UEs; and
a scheduling module, for performing scheduling for the third Rank according to the CQIs corresponding to the third Ranks of all the UEs and the third Ranks in the fourth register.

Herein, the high layer signaling indicates the third Rank may be transmitted between two scheduling time points or periodically transmitted so as to reduce the bandwidth occupied by the signaling.

The third and further registers need to store the newest third Rank in the high layer signaling and may update the Rank after receiving a high layer signaling each time or acquire the Rank in the signaling after receiving a high layer signaling each time and then compare the acquired Rank with that stored in the registers so that when the comparison shows the two Ranks are different, the one in the high layer signaling acquired is used to replace that in the registers.

As shown in Fig. 6, the CQI feedback method in the MU-MIMO system according to the third embodiment of the present invention includes following steps.

In step 61, the UE acquires the third Rank in the high layer signaling.

In step 62, the UE calculates a CQI corresponding to the third Rank.

In step 63, the UE feeds back the CQI corresponding to the third Rank to the Node B.

In step 64, the Node B performs the scheduling for the third Rank according to the CQIs corresponding to the third Ranks fed back from the UEs and the third Ranks in the high layer signaling.

And the next time, since the Rank in the register should be a newest Rank in the high layer signaling, the UE will calculate a CQI corresponding to a newest third Rank updated according to the high layer signaling.

Since the UE feeds back the CQI corresponding to the third Rank according to the high layer signaling, the Rank corresponding to the CQI is indicated by the high layer signaling, the CQI corresponding to the third Rank is accurate and the Node B performs the scheduling directly according to the Rank (third Rank) carried in the high layer signaling, the coding and modulation mode may be correctly selected based on the accurate CQI corresponding to the third Rank and the system throughput performance will be improved.

### <Fourth Embodiment>

In the fourth embodiment of the present invention, illustration will be given with reference to an example in which all UEs feed back CQIs corresponding to a same Rank and the CQIs corresponding to the same Rank are acquired according to the CQIs corresponding to the Rank in the high layer signaling.

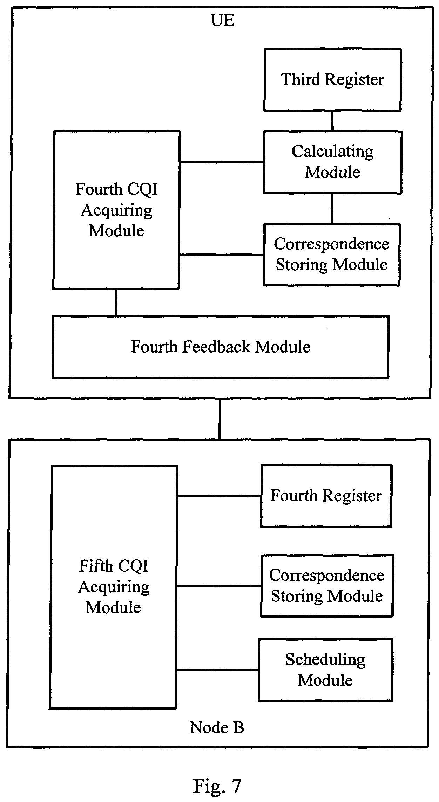

As shown in Fig. 7, a MIMO (multi-input multi-output) system according to the fourth embodiment of the invention includes a Node B and UEs and the Node B and the UEs communicate with each other through a wireless network.

The UE includes:
a third register, for storing a third Rank in the high layer signaling wherein the third Rank is one of Rank 1, Rank 2...and Rank n and the third Ranks of different UEs may be the same and may be different and the Rank stored in the third register is a newest third Rank in the high layer signaling;
a calculating module, for calculating a CQI corresponding to the third Rank value;
a correspondence storing module, for storing a correspondence between CQIs corresponding to different Ranks;
a fourth CQI acquiring module, for acquiring a CQI corresponding a the fourth Rank according to the CQI corresponding to the third Rank and the correspondence between CQIs corresponding to the different Ranks; and
a fourth feedback module, for transmitting the CQI corresponding to the fourth Rank to the Node B and the fourth Ranks of all the UEs are the same.

The Node B includes:
a fourth register, for storing third Ranks in the high layer signaling, wherein the Ranks stored in the fourth register are the newest third Ranks in the high layer signaling and are the same with those stored in the third registers of the UEs;
a correspondence storing module, for storing the correspondence between the CQIs corresponding to the different Ranks;
a fifth CQI acquiring module, for acquiring a CQI corresponding to the third Rank of the UE according to the CQI corresponding to the fourth Rank, the correspondence between the CQIs corresponding to the different Ranks and the third Ranks in the fourth register; and
a scheduling module, for performing scheduling for the third Rank according to the CQIs corresponding to the third Ranks of all the UEs.

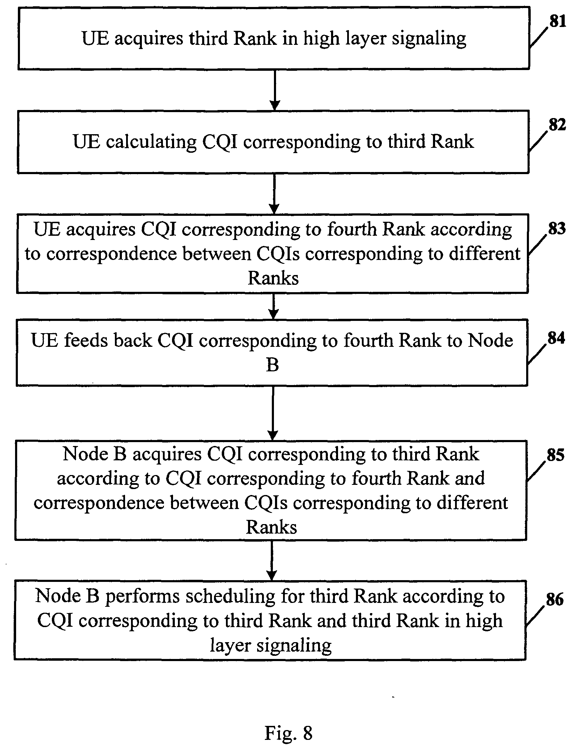

As shown in Fig. 8, the CQI feedback method in the MU-MIMO system according to the fourth embodiment of the present invention includes following steps.

In step 81, the UE acquires a third Rank in the high layer signaling.

In step 82, the UE calculates a CQI corresponding to the third Rank.

In step 83, the UE acquires a CQI corresponding to a fourth Rank according to CQIs corresponding to different Ranks.

In step 84, the UE feeds back the CQI corresponding to the fourth Rank to the Node B wherein the fourth Ranks of all the UEs are the same and of course when the third Rank and the fourth Rank are the same, the UE may directly feed back the CQI calculated in step 82.

In step 85, the Node B acquires the CQI corresponding to the third Rank according to the CQI corresponding to the fourth Rank and the correspondence between the CQIs corresponding to the different Ranks.

In step 86, the Node B performs the scheduling for the third Rank according to the CQI corresponding to the third Rank.

And the next time, since the Rank in the register should be a newest Rank in the high layer signaling, the UE will calculate a CQI corresponding to a newest third Rank updated according to the high layer signaling.

Since the UE feeds back the CQI corresponding to the fourth Rank according to the high layer signaling, the CQI corresponding to the fourth Rank is acquired according to the accurate CQI corresponding to the third Rank and the Node B acquires the accurate CQI corresponding to the third Rank according to the CQI corresponding to the fourth Rank and performs the scheduling directly according to the Rank (the third Rank) carried in the high layer signaling, the coding and modulation mode may be correctly selected based on the accurate CQI corresponding to the third Rank and the system throughput performance will be improved.

Next benefit effects of the present invention are illustrated with simulation results.

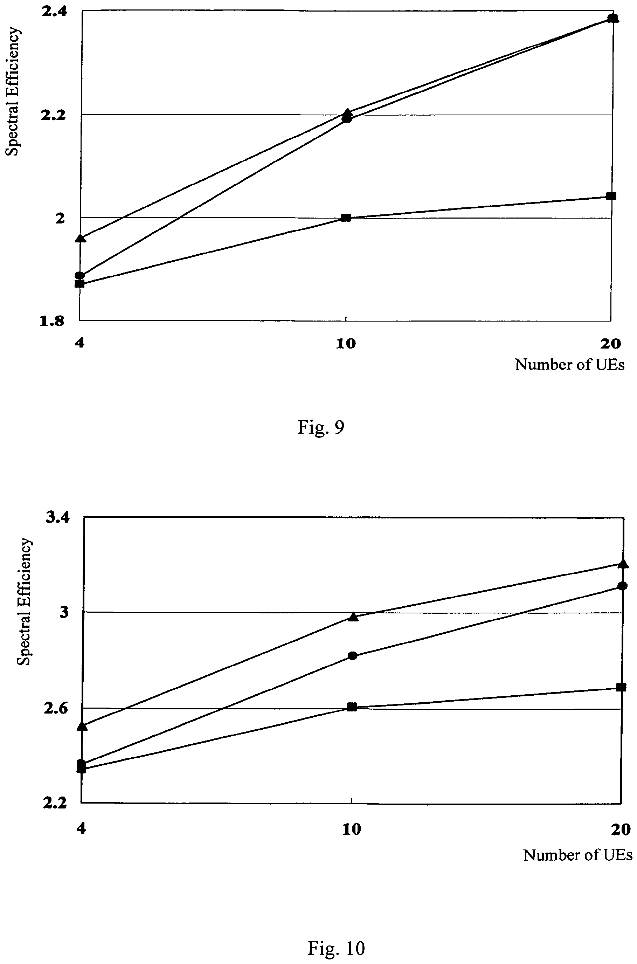

Fig. 9 is a schematic diagram showing under a first simulation condition, a comparison of the method of the present invention, a first conventional method in which the UE routinely feeds back the CQI corresponding to Rank 1 and the Node B acquires CQIs corresponding to other Ranks, and a second conventional method in which the UE routinely feeds back the CQI corresponding to Rank 2 and the Node B acquires CQIs corresponding to other Ranks.

Since the results acquired in the Node B in the first and second embodiments are the same, the two simulation curves are the same.

The first simulation condition is as follows:
two transmitting antennas;
Rank 1 and Rank 2 transmission modes are supported;
the size of codebook is 2bits;
correlation of transmission is 0.95;
Doppler Frequency Offset is 5.55Hz;
uplink feedback: one CQI per RB; and
the scheduled Rank and interference PVI is notified by a downlink signaling.

As shown in Fig. 9, the abscissa represents the number of UEs and the ordinate represents the spectral efficiency. The curve with triangle marks is the one of the methods according to the embodiments of the present invention, the curve with square marks is the one of the first conventional method, and the curve with round marks is the one of the second conventional method.

It should be noted that in Fig. 9, the abscissa is not evenly distributed.

As shown in Fig. 9, when the number of UEs is small (such as 4), the performance according to the present method is obviously higher than those according to the other two methods, and when the number of UEs is comparatively large (such as more than 20), since most UEs may be in the Rank 2 transmission mode, the performance according to the present method is, although not obviously, higher than that according to the second conventional method, and further obviously higher than that according to the first conventional method.

Fig. 10 is a schematic diagram showing under a second simulation condition, a comparison of the method of the present invention, a first conventional method in which the UE routinely feeds back the CQI corresponding to Rank 1 and the Node B acquires CQIs corresponding to other Ranks, and a second conventional method in which the UE routinely feeds back the CQI corresponding to Rank 2 and the Node B acquires CQIs corresponding to other Ranks.

Since the results acquired in the Node B in the first and second embodiments are the same, the two simulation curves are the same.

The second simulation condition is as follows:
four transmitting antennas;
Rank 1 and Rank 2 transmission modes are supported;
the size of codebook is 3bits;
correlation of transmission is 0.95;
Doppler Frequency Offset is 5.55Hz;
uplink feedback: one CQI per RB; and
the scheduled Rank and interference PVI is notified by a downlink signaling.

As shown in Fig. 10, the abscissa represents the number of UEs and the ordinate represents the spectral efficiency. The curve with triangle marks is the one of the methods according to the embodiments of the present invention, the curve with square marks is the one of the first conventional method, and the curve with round marks is the one of the second conventional method, wherein according to the second conventional method, the UE feed back a CQI corresponding to a smallest Rank 2.

It should be noted that in Fig. 10, the abscissa is not evenly distributed.

As shown in Fig. 10, the performance according to the present method is obviously higher than those according to the other two methods under the second simulation condition.

According to the illustration of the above embodiments, those skilled in the art may understand that the present invention may be implemented with software and a necessary general hardware platform or may be implemented with hardware, although in most cases the former is the preferred implementation. With this, the essence or the contribution to the prior art of the technical solution of the present invention can be embodied in a software product, wherein the software product is stored in a storage medium and includes several instructions which when executed will cause a UE perform the methods according to embodiments of the present invention.

In the description above, the present invention was described on the basis of preferred embodiments, however, the present invention is not limited to these embodiments.

More particularly, the present invention, in accordance with a first additional preferred embodiment the present invention provides a MU-MIMO system, comprising a Node B and UEs which communicate with each other through a wireless network, wherein the UE feeds back a CQI corresponding to a previous scheduled first Rank to the Node B, and the Node B acquires CQIs corresponding to all Ranks of the UE according to the CQI corresponding to the first Rank fed back from the UE and performs scheduling according to the CQIs corresponding to all Ranks of all the UEs. The UE comprises a first register, for storing the previous scheduled first Rank for a resource block, a calculating module, for calculating the CQI corresponding to the first Rank, and a first feedback module, for transmitting the CQI corresponding to the first Rank to the Node B. Optionally, the Node B comprises a second register, for storing previous scheduled first Ranks for the resource blocks of the UEs, a correspondence storing module, for storing a correspondence between CQIs corresponding to different Ranks, a first acquiring module, for acquiring the CQIs corresponding to all Ranks of the UE according to the CQI corresponding to the first Rank and the correspondence between the CQIs corresponding to the different Ranks, and a scheduling module, for performing Rank adaptation according to the CQIs corresponding to all Ranks of all the UEs. As a further option, the Node B further comprises a second updating module, for updating the first Rank stored in the second register for the UE according to the scheduled Rank and transmitting the updated Rank to the UE, and the UE further comprises a first updating module, for updating the first Rank stored in the first register according to the updated Rank transmitted from the Node B.

In accordance with a second additional preferred embodiment the present invention provides a MU-MIMO system, comprising a Node B and UEs which communicate with each other through a wireless network, wherein the UE acquires a CQI corresponding to a second Rank according to a CQI corresponding to a previous scheduled first Rank and a correspondence between CQIs corresponding to different Ranks and feeds back the CQI corresponding to a second Rank to the Node B, and the second Ranks from all the UEs are the same, and wherein the Node B acquires CQIs corresponding to all Ranks of the UE according to the CQI corresponding to the second Rank fed back from the UE and performs scheduling according to CQIs corresponding to all Ranks of all the UEs. The UE comprises a first register, for storing the previous scheduled first Rank for the resource block of the UE, a calculating module, for calculating the CQI corresponding to the first Rank, a correspondence storing module, for storing the correspondence between CQIs corresponding to different Ranks, a second acquiring module, for acquiring the CQI corresponding to the second Rank according to the CQI corresponding to the first Rank and the correspondence between the CQIs corresponding to the second and other Ranks, and a second feedback module, for transmitting the CQI corresponding to the second Rank to the Node B. Optionally, the Node B comprises a correspondence storing module, for storing the correspondence between the CQIs corresponding to the different Ranks, a third acquiring module, for acquiring the CQIs corresponding to all Ranks of the UE according to the CQI corresponding to the first Rank and the correspondence between the CQIs corresponding to the different Ranks, and a scheduling module, for performing Rank adaptation according to the CQIs corresponding to all Ranks of all the UEs. As a further option, the Node B further comprises a second updating module, for transmitting the scheduled Rank as a Rank updated Rank to the UE, and the UE further comprises a first updating module, for updating the first Rank stored in the first register according to the updated Rank transmitted from the Node B.

In accordance with a third additional preferred embodiment the present invention provides a MU-MIMO system, comprising a Node B and UEs which communicate with each other through a wireless network, wherein the UE feeds back a CQI corresponding to a third Rank to the Node B and the third Rank is a newest Rank in a high layer signaling, wherein the Node B performs scheduling for the third Rank according to the CQIs corresponding to the third Ranks fed back from the UEs and the third Rank in the high layer signaling, and wherein the UE comprises a third register, for storing the third Rank in the high layer signaling, a calculating module, for calculating the CQI corresponding to the third Rank, and a third feedback module, for transmitting the CQI corresponding to the third Rank to the Node B. Optionally, the Node B comprises a fourth register, for storing the third Ranks in the high layer signaling, and a scheduling module, for performing the scheduling for the third Rank according to the CQIs corresponding to the third Ranks of all the UEs and the third Ranks in the fourth register.

In accordance with a fourth additional preferred embodiment the present invention provides a MU-MIMO system, comprising a Node B and UEs which communicate with each other through a wireless network, wherein the UE acquires a CQI corresponding to a fourth Rank according to a CQI corresponding to a third Rank and a correspondence between CQIs corresponding to different Ranks and feeds back the CQI corresponding to the fourth Rank to the Node B and the third Rank is a newest Rank in a high layer signaling, the fourth Ranks of all the UEs are the same, wherein the Node B acquires the CQI corresponding to the third Rank of the UE according to the CQI corresponding to the fourth Rank fed back from the UE and the third Ranks in the high layer signaling and performs scheduling for the third Rank according to the CQI corresponding to the third Rank fed back from the UE and the third Rank in the high layer signaling, and wherein the UE comprises a third register, for storing the third Rank in the high layer signaling, a calculating module, for calculating the CQI corresponding to the third Rank value, a correspondence storing module, for storing the correspondence between CQIs corresponding to different Ranks, a fourth acquiring module, for acquiring the CQI corresponding to the fourth Rank according to the CQI corresponding to the third Rank and the correspondence between the CQIs corresponding to the different Ranks, and a fourth feedback module, for transmitting the CQI corresponding to the fourth Rank to the Node B and the fourth Ranks of all the UEs are the same. Optionally, the Node B comprises a fourth register, for storing the third Rank in the high layer signaling, a correspondence storing module, for storing the correspondence between the CQIs corresponding to the different Ranks, a fifth acquiring module, for acquiring the CQI corresponding to the third Rank of the UE according to the CQI corresponding to the fourth Rank, the correspondence between the CQIs corresponding to the different Ranks and the third Ranks in the fourth register, and a scheduling module, for performing the scheduling for the third Rank according to the CQIs corresponding to the third Ranks of all the UEs and the third Ranks in the fourth register.

In accordance with a fifth additional preferred embodiment the present invention provides a CQI feedback method in a MU-MIMO system, comprising a step of feeding back a CQI and a step of acquiring CQIs corresponding to all Ranks of a UE by a Node B, wherein in the step of feeding back the CQI, the UE feeds back a CQI corresponding to a first Rank to the Node B and the first Rank is a previous scheduled Rank of the UE, wherein in the step of acquiring the CQIs corresponding to all Ranks of the UE by the Node B, the Node B acquires the CQIs corresponding to all Ranks of the UE according to the CQI corresponding to the first Rank fed back from the UE, and wherein the step of feeding back the CQI comprises the UE acquires the previous scheduled first Rank, the UE calculates the CQI corresponding to the first Rank, and the UE transmits the CQI corresponding to the first Rank to the Node B. Optionally, in the step of acquiring the CQIs corresponding to all Ranks of the UE by the Node B, the Node B acquires the CQIs corresponding to all Ranks of the UE according to the CQI corresponding to the first Rank fed back from the UE and a correspondence between CQIs corresponding to different Ranks. As a further option, the Node B updates the first Rank of the UE stored in the Node B according to a scheduled Rank and transmits the updated Rank to the UE, and the UE updates the first Rank according to the updated Rank transmitted from the Node B.

In accordance with a sixth additional preferred embodiment the present invention provides a CQI feedback method in a MU-MIMO system, comprising a step of feeding back a CQI and a step of acquiring CQIs corresponding to all Ranks of a UE by a Node B, wherein in the step of feeding back the CQI, the UE acquires a CQI corresponding to a second Rank according to a CQI corresponding to a previous scheduled first Rank and a correspondence between CQIs corresponding to different Ranks and feeds back the CQI corresponding to the second Rank to the Node B, wherein the first Rank is the previous scheduled Rank of the UE and the second Ranks of all UEs are the same, wherein in the step of acquiring CQIs corresponding to all Ranks of the UE by the Node B, the Node B acquires CQIs corresponding to all Ranks of the UE according to the CQI corresponding to the second Rank fed back from the UE, and wherein in the step of feeding back the CQI the UE acquires the previous scheduled first Rank, the UE calculates the CQI corresponding to the first Rank, the UE acquires the CQI corresponding to the second Rank according to the correspondence between CQIs corresponding to different Ranks, and the UE transmits the CQI corresponding to the second Rank to the Node B. Optionally, in the step of acquiring CQIs corresponding to all Ranks of the UE by the Node B, the Node B acquires CQIs corresponding to all Ranks of the UE according to the CQI corresponding to the second Rank and the correspondence between the CQIs corresponding to the second Rank and other Ranks. As a further option, the Node B transmits a scheduled Rank as an updated Rank to the UE, and the UE updates the first Rank according to the updated Rank transmitted from the Node B.

In accordance with a seventh additional preferred embodiment the present invention provides a CQI feedback method in a MU-MIMO system, comprising a step of feeding back a CQI and a step of acquiring CQIs corresponding to all Ranks of a UE by a Node B, wherein in the step of feeding back the CQI, the UE acquires a CQI corresponding to a fourth Rank according to a CQI corresponding to a third Rank and a correspondence between CQIs corresponding to different Ranks and feeds back the CQI corresponding to the fourth Rank to the Node B, wherein the third Rank is a newest Rank in a high layer signaling and the fourth Ranks of all UEs are the same, wherein in the step of acquiring the CQIs corresponding to all Ranks of the UE by the Node B, the Node B acquires CQIs corresponding to all Ranks of the UE according to the CQI corresponding to the second Rank fed back from the UE, and wherein in the step of feeding back the CQI the UE acquires the third Rank in the high layer signaling, the UE calculates the CQI corresponding to the third Rank, the UE acquires the CQI corresponding to the fourth Rank according to the correspondence between CQIs corresponding to different Ranks, and the UE transmits the CQI corresponding to the fourth Rank to the Node B, wherein the fourth Ranks of all the UEs are the same. Optionally, in the step of acquiring the CQIs corresponding to all Ranks of the UE by the Node B, the Node B acquires the CQI corresponding to the third Rank of the UE according to the CQI corresponding to the fourth Rank fed back from the UE, the correspondence between CQIs corresponding to different Ranks and the third Rank in the high layer signaling.

In accordance with a eighth additional preferred embodiment the present invention provides a UE, comprising a first feedback module, for transmitting a CQI corresponding to a first Rank to a Node B, wherein the first Rank is a previous scheduled first Rank for a resource block or a newest Rank in a high layer signaling, a first register, for storing the first Rank, and a calculating module, for calculating the CQI corresponding to the first Rank. Optionally, when the first Rank is the previous scheduled first Rank for the resource block, the UE further comprises a first updating module, for updating the first Rank stored in the first register according to a scheduled Rank from the Node B.

In accordance with an ninth additional preferred embodiment the present invention provides a UE, comprising a second feedback module, for transmitting a CQI corresponding to a second Rank to a Node B, wherein the CQI corresponding to the second Rank is acquired according to a CQI corresponding to a first Rank, and the first Rank is a previous scheduled first Rank for a resource block or a newest Rank in a high layer signaling, a first register, for storing the first Rank, a calculating module, for calculating the CQI corresponding to the first Rank, a correspondence storing module, for storing the correspondence between CQIs corresponding to different Ranks, and a second acquiring module, for acquiring the CQI corresponding to the second Rank according to the CQI corresponding to the first Rank and the correspondence between CQIs corresponding to different Ranks. Optionally, when the first Rank is the previous scheduled first Rank for the resource block, the UE further comprises a first updating module, for updating the first Rank stored in the first register according to a scheduled Rank from the Node B.

In accordance with a tenth additional preferred embodiment the present invention provides a Node B, comprising a second register, for storing previous scheduled first Ranks for resource blocks of UEs, a correspondence storing module, for storing a correspondence between CQIs corresponding to different Ranks, a first acquiring module, for acquiring CQIs corresponding to all Ranks of the UE according to the CQI corresponding to the first Rank and the correspondence between the CQIs corresponding to the different Ranks, a scheduling module, for performing Rank adaptation according to the CQIs corresponding to all Ranks of all the UEs, and a second updating module, for updating the first Rank stored in the second register of the UE according to the scheduled Rank and transmitting the updated Rank to the UE.

## Claims

1. A Multi-User Multi-Input Multi-Output, MU-MIMO, system, comprising a Node B and User Equipments, UEs, which communicate with each other through a wireless network, which is **characterized in that**,
the UE feeds back a Channel Quality Indicator, CQI, corresponding to a a first Rank acquired according to a previously scheduled first Rank and a correspondence between CQIs corresponding to different ranks to the Node B (23), wherein the previous scheduled first Rank is the number of data streams stored in a register; and
the Node B acquires CQIs corresponding to all Ranks of the UE according to the CQI corresponding to the first Rank fed back from the UE and a correspondence between CQIs corresponding to different ranks, and performs scheduling according to the CQIs corresponding to all Ranks of all the UEs (24, 25).

2. The system according to claim 1, wherein the UE comprises:
a first register, for storing the previous scheduled first Rank for a resource block;
a calculating module, for calculating the CQI corresponding to the first Rank;
a first feedback module, for transmitting the CQI corresponding to the first Rank to the Node B; and
a first updating module, for updating the first Rank stored in the first register according to the updated Rank transmitted from the Node B; and
the Node B comprises:
a second register, for storing previous scheduled first Ranks for the resource blocks of the UEs;
a correspondence storing module, for storing a correspondence between CQIs corresponding to different Ranks;
a first acquiring module, for acquiring the CQIs corresponding to all Ranks of the UE according to the CQI corresponding to the first Rank and the correspondence between the CQIs corresponding to the different Ranks;
a scheduling module, for performing Rank adaptation according to the CQIs corresponding to all Ranks of all the UEs; and
a second updating module, for updating the first Rank stored in the second register for the UE according to the scheduled Rank and transmitting the updated Rank to the UE.

3. The system according to claim 1, wherein
the UE acquires a CQI corresponding to a second Rank according to a CQI corresponding to a previous scheduled first Rank and a correspondence between CQIs corresponding to different Ranks and feeds back the CQI corresponding to the second Rank to the Node B, and the second Ranks from all the UEs are the same; and
the Node B acquires CQIs corresponding to all Ranks of the UE according to the CQI corresponding to the second Rank fed back from the UE and performs scheduling according to CQIs corresponding to all Ranks of all the UEs.

4. The system according to claim 3, wherein
the UE comprises:
a first register, for storing the previous scheduled first Rank for the resource block of the UE;
a calculating module, for calculating the CQI corresponding to the first Rank;
a correspondence storing module, for storing the correspondence between CQIs corresponding to different Ranks;
a second acquiring module, for acquiring the CQI corresponding to the second Rank according to the CQI corresponding to the first Rank and the correspondence between the CQIs corresponding to the second and other Ranks;
a second feedback module, for transmitting the CQI corresponding to the second Rank to the Node B; and
a first updating module, for updating the first Rank stored in the first register according to the updated Rank transmitted from the Node B; and
the Node B comprises:
a correspondence storing module, for storing the correspondence between the CQIs corresponding to the different Ranks;
a third acquiring module, for acquiring the CQIs corresponding to all Ranks of the UE according to the CQI corresponding to the first Rank and the correspondence between the CQIs corresponding to the different Ranks;
a scheduling module, for performing Rank adaptation according to the CQIs corresponding to all Ranks of all the UEs; and
a second updating module, for transmitting the scheduled Rank as a Rank updated Rank to the UE.

5. A Channel Quality Indicator, CQI, feedback method in a Multi-User Multi-Input Multi-Output, MU-MIMO, system, comprising a step of feeding back a CQI and a step of acquiring CQIs corresponding to all Ranks of a User Equipment, UE, by a Node B, which is **characterized in that**
in the step of feeding back the CQI, the UE feeds back a CQI corresponding to a first Rank acquired according to a previously scheduled first Rank of the UE (23) and a correspondence between CQIs corresponding to different ranks, wherein the previous scheduled first Rank is the number of data streams stored in a register; and
in the step of acquiring the CQIs corresponding to all Ranks of the UE by the Node B, the Node B acquires the CQIs corresponding to all Ranks of the UE according to the CQI corresponding to the first Rank fed back from the UE (24), and a correspondence between CQIs corresponding to different ranks.

6. The method according to claim 5, wherein:
in the step of feeding back the CQI, the UE acquires a CQI corresponding to a second Rank according to a CQI corresponding to a previous scheduled first Rank and a correspondence between CQIs corresponding to different Ranks and feeds back the CQI corresponding to the second Rank to the Node B, wherein the first Rank is the previous scheduled Rank of the UE and the second Ranks of all UEs are the same; and
in the step of acquiring CQIs corresponding to all Ranks of the UE by the Node B, the Node B acquires CQIs corresponding to all Ranks of the UE according to the CQI corresponding to the second Rank fed back from the UE.

## Patentansprüche

1. Ein Mehrfachnutzer-Mehrfacheingang-Mehrfachausgang, MU-MIMO, -System, das einen Knoten B und Benutzereinrichtungen, UE, aufweist, die durch ein drahtloses Netzwerk miteinander kommunizieren, das **dadurch gekennzeichnet ist, dass**
die UE einen Kanalqualitätsindikator, CQI, der einem ersten Rang entspricht, der gemäß einem vorhergehend geplanten ersten Rang und einer Entsprechung zwischen CQI, die unterschiedlichen Rängen entsprechen, erfasst wurde, zu dem Knoten B (23) rückführt, wobei der vorhergehende geplante erste Rang die Anzahl von Datenströmen ist, die in einem Register gespeichert ist; und
der Knoten B CQI erfasst, die allen Rängen der UE entsprechen, gemäß dem CQI, der dem ersten Rang entspricht, der von der UE rückgeführt wird, und einer Entsprechung zwischen CQI, die unterschiedlichen Rängen entsprechen, und eine Zeitplanung gemäß den CQI durchführt, die allen Rängen aller UE (24, 25) entsprechen.

2. Das System gemäß Anspruch 1, bei dem
die UE folgende Merkmale aufweist:
ein erstes Register zum Speichern des vorhergehenden geplanten ersten Rangs für einen Ressourcenblock;
ein Berechnungsmodul zum Berechnen des CQI, der dem ersten Rang entspricht;
ein erstes Rückführungsmodul zum Übertragen des CQI, der dem ersten Rang entspricht, zu dem Knoten B; und
ein erstes Aktualisierungsmodul zum Aktualisieren des ersten Rangs, der in dem ersten Register gespeichert ist, gemäß dem aktualisierten Rang, der von dem Knoten B übertragen wird; und
der Knoten B folgende Merkmale aufweist:
ein zweites Register zum Speichern vorhergehender geplanter erster Ränge für die Ressourcenblöcke der UE;
ein Entsprechungsspeichermodul zum Speichern einer Entsprechung zwischen CQI, die unterschiedlichen Rängen entsprechen;
ein erstes Erfassungsmodul zum Erfassen der CQI, die allen Rängen der UE entsprechen, gemäß dem CQI, der dem ersten Rang entspricht, und der Entsprechung zwischen den CQI, die den unterschiedlichen Rängen entsprechen;
ein Zeitplanungsmodul zum Durchführen einer Ranganpassung gemäß den CQI, die allen Rängen aller UE entsprechen; und
ein zweites Aktualisierungsmodul zum Aktualisieren des ersten Rangs, der in dem zweiten Register für die UE gespeichert ist, gemäß dem geplanten Rang, und Übertragen des aktualisierten Rangs an die UE.

3. Das System gemäß Anspruch 1, bei dem
die UE einen CQI erfasst, der einem zweiten Rang entspricht, gemäß einem CQI, der einem vorhergehenden geplanten ersten Rang entspricht und einer Entsprechung zwischen CQI, die unterschiedlichen Rängen entsprechen, und den CQI, der dem zweiten Rang entspricht, zu dem Knoten B rückführt, und die zweiten Ränge von allen UE dieselben sind; und
der Knoten B CQI erfasst, die allen Rängen der UE entsprechen, gemäß dem CQI, der dem zweiten Rang entspricht, der von der UE rückgeführt wird, und eine Zeitplanung gemäß CQI durchführt, die allen Rängen aller UE entsprechen.

4. Das System gemäß Anspruch 3, bei dem
die UE folgende Merkmale aufweist:
ein erstes Register zum Speichern des vorhergehenden geplanten ersten Rangs für den Ressourcenblock der UE;
ein Berechnungsmodul zum Berechnen des CQI, der dem ersten Rang entspricht;
ein Entsprechungsspeicherungsmodul zum Speichern der Entsprechung zwischen CQI, die unterschiedlichen Rängen entsprechen;
ein zweites Erfassungsmodul zum Erfassen des CQI, der dem zweiten Rang entspricht, gemäß dem CQI, der dem ersten Rang entspricht und der Entsprechung zwischen den CQI, die dem zweiten und anderen Rängen entsprechen;
ein zweites Rückführungsmodul zum Übertragen des CQI, der dem zweiten Rang entspricht, zu dem Knoten B; und
ein erstes Aktualisierungsmodul zum Aktualisieren des ersten Rangs, der in dem ersten Register gespeichert ist, gemäß dem aktualisierten Rang, der von dem Knoten B übertragen wird; und
der Knoten B folgende Merkmale aufweist:
ein Entsprechungsspeicherungsmodul zum Speichern der Entsprechung zwischen den CQI, die den unterschiedlichen Rängen entsprechen;
ein drittes Erfassungsmodul zum Erfassen der CQI, die allen Rängen der UE entsprechen, gemäß dem CQI, der dem ersten Rang entspricht und der Entsprechung zwischen den CQI, die den unterschiedlichen Rängen entsprechen;
ein Zeitplanungsmodul zum Durchführen einer Ranganpassung gemäß den CQI, die allen Rängen aller UE entsprechen; und
ein zweites Aktualisierungsmodul zum Übertragen des geplanten Rangs als einen Rang-aktualisierten Rang für die UE.

5. Ein Kanalqualitätsindikator, CQI, -Rückführungsverfahren in einem Mehrfachnutzer-Mehrfacheingang-Mehrfachausgang, MU-MIMO, -System, das einen Schritt des Rückführens eines CQI und einen Schritt des Erfassens von CQI, die allen Rängen einer Benutzereinrichtung, UE, entsprechen, durch einen Knoten B aufweist, das **dadurch gekennzeichnet ist, dass**
bei dem Schritt des Rückführens des CQI die UE einen CQI rückführt, der einem ersten Rang entspricht, der gemäß einem vorhergehend geplanten ersten Rang der UE (23) und einer Entsprechung zwischen CQI, die unterschiedlichen Rängen entsprechen, erfasst wurde, wobei der vorhergehende geplante erste Rang die Anzahl von Datenströmen ist, die in einem Register gespeichert ist; und
bei dem Schritt des Erfassens der CQI, die allen Rängen der UE entsprechen, durch den Knoten B, der Knoten B die CQI erfasst, die allen Rängen der UE entsprechen, gemäß dem CQI, der dem ersten Rang entspricht, der von der UE (24) rückgeführt wird, und einer Entsprechung zwischen CQI, die unterschiedlichen Rängen entsprechen.

6. Das Verfahren gemäß Anspruch 5, bei dem:
bei dem Schritt des Rückführens des CQI die UE einen CQI erfasst, der einem zweiten Rang entspricht, gemäß einem CQI, der einem vorhergehenden geplanten ersten Rang entspricht und einer Entsprechung zwischen CQI, die unterschiedlichen Rängen entsprechen, und den CQI, der dem zweiten Rang entspricht, zu dem Knoten B rückführt, wobei der erste Rang der vorhergehende geplante Rang der UE ist und die zweiten Ränge aller UE dieselben sind; und
bei dem Schritt des Erfassens von CQI, die allen Rängen der UE entsprechen, durch den Knoten B, der Knoten B CQI erfasst, die allen Rängen der UE entsprechen, gemäß dem CQI, der dem zweiten Rang entspricht, der von der UE rückgeführt wird.

## Revendications

1. Système multi-utilisateurs à entrées multiples sorties multiples, MU-MIMO, comprenant un Noeud B et des Equipements d'Utilisateur, UE, qui communiquent entre eux à travers un réseau sans fil, qui est **caractérisé par le fait que**
l'UE retourne au Noeud B (23) un Indicateur de Qualité des Canal, CQI, correspondant à un premier Rang acquis selon un premier Rang programmé antérieurement et une correspondance entre les CQI correspondant à des rangs différents, où le premier Rang programmé antérieur est le nombre de flux de données mémorisés dans un registre; et
le Noeud B acquiert les CQI correspondant à tous les Rangs de l'UE selon le CQI correspondant au premier Rang retourné par l'UE et une correspondance entre les CQI correspondant à des rangs différents, et effectue une programmation selon les CQI correspondant à tous les Rangs de tous les UE (24, 25).

2. Système selon la revendication 1, dans lequel
l'UE comprend:
un premier registre, destiné à mémoriser le premier Rang programmé antérieur pour un bloc de ressources;
un module de calcul, destiné à calculer le CQI correspondant au premier Rang;
un premier module de rétroaction, destiné à transmettre au noeud B le CQI correspondant au premier Rang; et
un premier module de mise à jour, destiné à mettre à jour le premier Rang mémorisé dans le premier registre selon le Rang mis à jour transmis par le noeud B; et
le noeud B comprend:
un deuxième registre, destiné à mémoriser les premiers Rangs programmés antérieurs pour les blocs de ressources des UE;
un module de mémorisation de correspondance, destiné à mémoriser une correspondance entre les CQI correspondant à des Rangs différents;
un premier module d'acquisition, destiné à acquérir les CQI correspondant à tous les Rangs de l'UE selon le CQI correspondant au premier Rang et la correspondance entre les CQI correspondant aux différents Rangs;
un module de programmation, destiné à effectuer l'adaptation de Rangs selon les CQI correspondant à tous les Rangs de tous les UE; et
un deuxième module de mise à jour, destiné à mettre à jour le premier Rang mémorisé dans le deuxième registre pour l'UE selon le Rang programmé et transmettre à l'UE le Rang mis à jour.

3. Système selon la revendication 1, dans lequel
l'UE acquiert un CQI correspondant à un deuxième Rang selon un CQI correspondant à un premier Rang programmé antérieurement et une correspondance entre les CQI correspondant à différents Rangs et retourne au Noeud B le CQI correspondant au deuxième Rang, et les deuxièmes Rangs de tous les UE sont les mêmes; et
le Noeud B acquiert les CQI correspondant à tous les Rangs de l'UE selon le CQI correspondant au deuxième Rang retourné par l'UE et effectue la programmation selon les CQI correspondant à tous les Rangs de tous les UE.

4. Système selon la revendication 3, dans lequel
l'UE comprend:
un premier registre, destiné à mémoriser le premier Rang programmé antérieur pour le bloc de ressources de l'UE;
un module de calcul, destiné à calculer le CQI correspondant au premier Rang;
un module de mémorisation de correspondance, destiné à mémoriser la correspondance entre les CQI correspondant à des Rangs différents;
un deuxième module d'acquisition, destiné à acquérir le CQI correspondant au deuxième Rang selon le CQI correspondant au premier Rang et la correspondance entre les CQI correspondant au deuxième Rang et aux autres Rangs;
un deuxième module de rétroaction, destiné à transmettre au noeud B le CQI correspondant au deuxième Rang; et
un premier module de mise à jour, destiné à mettre à jour le premier Rang mémorisé dans le premier registre selon le Rang mis à jour transmis par le Noeud B; et
le Noeud B comprend:
un module de mémorisation de correspondance, destiné à mémoriser la correspondance entre les CQI correspondant aux différents Rangs;
un troisième module d'acquisition, destiné à acquérir les CQI correspondant à tous les Rangs de l'UE selon le CQI correspondant au premier Rang et la correspondance entre les CQI correspondant aux différents Rangs;
un module de programmation, destiné à effectuer une adaptation de Rangs selon les CQI correspondant à tous les Rangs de tous les UE; et
un deuxième module de mise à jour, destiné à transmettre à l'UE le Rang programmé comme Rang mis à jour.

5. Procédé de rétroaction d'Indicateur de Qualité de Canal, CQI, dans un système multi-utilisateurs à entrées multiples sorties multiples, MU-MIMO, comprenant une étape consistant à retourner un CQI et une étape consistant à acquérir les CQI correspondant à tous les Rangs d'un Equipement d'Utilisateur, UE, par un noeud B, qui est **caractérisé par le fait que**
à l'étape de rétroaction du CQI, l'UE retourne un CQI correspondant à un premier Rang acquis selon un premier Rang de l'UE (23) programmé antérieurement et une correspondance entre les CQI correspondant à des Rangs différents, où le premier Rang programmé antérieurement est le nombre de flux de données mémorisés dans un registre; et
à l'étape d'acquisition par le Noeud B des CQI correspondant à tous les Rangs de l'UE, le Noeud B acquiert les CQI correspondant à tous les Rangs de l'UE selon le CQI correspondant au premier Rang retourné par l'UE (24), et une correspondance entre les CQI correspondant à des Rangs différents.

6. Procédé selon la revendication 5, dans lequel:
à l'étape de rétroaction du CQI, l'UE acquiert un CQI correspondant à un deuxième Rang selon un CQI correspondant à un premier Rang programmé antérieur et une correspondance entre les CQI correspondant à des Rangs différents et retourne au Noeud B le CQI correspondant au deuxième Rang, où le premier Rang est le Rang programmé antérieur de l'UE et les deuxièmes Rangs de tous les UE sont les mêmes; et
à l'étape d'acquisition par le Noeud B des CQI correspondant à tous les Rangs de l'UE, le Noeud B acquiert les CQI correspondant à tous les Rangs de l'UE selon le CQI correspondant au deuxième Rang retourné par l'UE.
